# EUROPÄISCHE PATENTANMELDUNG

(11) **EP 3 093 657 A1**
(43) Veröffentlichungstag der Anmeldung: **16.11.2016**
(21) Anmeldenummer: 16163723.6
(22) Anmeldetag: 04.04.2016
(51) Int. Cl.: G01N 29/22

(54) **VORRICHTUNG ZUR ZERSTÖRUNGSFREIEN PRÜFUNG EINER RADSATZWELLE**

(30) Priorität: 11.05.2015 DE 102015208711
(71) Anmelder: DB Systemtechnik GmbH, 32423 Minden (DE)
(72) Erfinder: Hintze, Hartmut, 14715 Milow (DE); Gropler, Ludwig, 14778 Wollin (DE); Bethke, Stefan, 14482 Potsdam (DE)
(74) Vertreter: Zinken-Sommer, Rainer

(57) **Zusammenfassung**

Die Erfindung betrifft eine Vorrichtung (100) zur zerstörungsfreien Prüfung einer Radsatzwelle, umfassend einen Tragrahmen (101) mit mindestens einem Prüfkopf und einer Mehrzahl von Führungsrollen (102), wobei der Tragrahmen (101) entlang einer ersten Längsachse eine im wesentlichen bogenförmige Kontur aufweist und mittels der Führungsrollen (102) gegen die Oberfläche der Radsatzwelle abstützbar sowie auf dieser in deren Umfangsrichtung verfahrbar ist. Die Erfindung soll die Zuverlässigkeit und Praxistauglichkeit der Vorrichtung auch unter den räumlich sehr beengten Bedingungen innerhalb des Einbauraums von Radsätzen in Schienenfahrzeugen verbessern. Hierzu ist vorgesehen, dass die Vorrichtung zusätzlich einen Neigungssensor (106) aufweist.

## Beschreibung

Die Erfindung betrifft eine Vorrichtung zur zerstörungsfreien Prüfung einer Radsatzwelle, umfassend einen Tragrahmen mit mindestens einem Prüfkopf und einer Mehrzahl von Führungsrollen, wobei der Tragrahmen entlang einer ersten Längsachse eine im wesentlichen bogenförmige Kontur aufweist und mittels der Führungsrollen gegen die Oberfläche der Radsatzwelle abstützbar sowie auf dieser in deren Umfangsrichtung verfahrbar ist.

Die Radsatzwellen von Schienenfahrzeugen sind in festgelegten Prüfintervallen auf eventuelle Beschädigungen zu überprüfen, welche durch die im Betrieb der Schienenfahrzeuge auftretenden Belastungen hervorgerufen werden können. Hierzu werden die Radsätze aus den Drehgestellen bzw. Radsatzführungen ausgebaut, entlackt und auf stationären Prüfständen - beispielsweise mittels Ultraschalltechnik - auf mechanische Schäden wie z.B. Rissbildungen untersucht. Inbesondere wegen des Aus- und Einbauens der Radsatzwellen ist dies ein umständlicher und zeitraubender Vorgang, der eine Herausnahme des Schienenfahrzeuges aus dem Produktionsprozess und dessen Zuführung in einen maschinentechnisch entsprechend ausgestatteten Instandhaltungsstützpunkt erforderlich macht. Als Alternative zum Ausbau der Radsatzwelle steht bislang nur die Möglichkeit des Anhebens des Schienenfahrzeuges zumindest im Bereich der zu prüfenden Radsatzwelle zur Verfügung, so dass die Radsatzwelle zum Zwecke der Überprüfung frei drehbar ist. Mit beiden Technologien ist ein erheblicher infrastruktureller, zeitlicher und monetärer Aufwand verbunden.

Aus der EP 2 270 487 A1 ist eine Vorrichtung zur Ultraschallprüfung von Radsatzwellen von Eisenbahn-Güterwagen bekannt, welche mittels zweier geteilter Quader in der Art einer Rohrschelle an die zu prüfende Radsatzwelle angebaut wird. Beide Quader sind durch einen sich in Längsrichtung parallel zur Radsatzwelle erstreckenden Träger miteinander gekoppelt, auf dem die Prüfköpfe montiert sind. Diese Vorrichtung soll zwar den Ausbau der zu prüfenden Radsatzwelle überflüssig machen, ist aber sehr voluminös konzipiert und nur sehr schwer montierbar, da das Montieren und gegeneinander Verschrauben der Quader-Halbschalen nicht ohne ein Umgreifen oder zumindest Hintergreifen der Radsatzwelle möglich ist. Insbesondere bei einem im Bereich der Radsatzwelle eingeschränkten Montageraum ist dies problematisch bzw. teilweise sogar unmöglich. Zudem ist eine solche Vorrichtung bei Radsatzwellen, auf deren Wellenschaft zusätzliche Bauteile, wie z.B. Achswellen-Bremsscheiben, montiert sind, entweder gar nicht oder nur sehr umständlich einsetzbar, da der Längsträger mit diesen kollidieren würde. Dies macht das Bereithalten eines Sortiments von unterschiedlich langen Längsträgern erforderlich.

EP 2 138 838 A2 offenbart eine Ultraschall-Prüfvorrichtung, welche in einen halbkreisförmig gebogenen Träger integriert ist, der sich mittels magnetisierter Führungsrollen auf der Oberfläche eines zu prüfenden Rohres bzw. zylindrischen Körpers abstützt und relativ zu diesem in dessen Umfangsrichtung verfahrbar ist. Die Ultraschallprüfköpfe sind derart auf dem Träger angeordnet, dass sie in einer zur Längsachse des Rohres bzw. zylindrischen Körpers im Wesentlichen lotrechten Richtung in diesen einschallen. Die Positionsbestimmung der Prüfvorrichtung in Bezug auf den Prüfkörper erfolgt mittels eines Encoders, d.h. eines Messwertgebers, der ausgehend von einer Referenzposition die Richtung und die Anzahl der zurückgelegten Maßinkremente registriert bzw. zählt und hieraus die erreichte Position ermittelt. Derartige Encoder besitzen inkrementale, zu zählende Maßverkörperungen in Form optisch visualisierbarer (z.B. mittels einer Lichtschranke) oder magnetischer Strichmuster. Die Positionsbestimmung erfolgt durch Ermitteln der in Bezug auf die Referenzposition zurückgelegten Anzahl von registrierten Maßverkörperungen.
Allerdings hat sich herausgestellt, dass die Benetzung des Prüfkörpers mit Wasser, welches der Ankopplung der Prüfköpfe an den jeweiligen Prüfkörper dient, zu fehlerhaften Positionsmesswerten führen kann. Dies tritt insbesondere dann auf, wenn - bedingt durch maßliche Abweichungen zwischen den Oberflächenkonturen von Prüfkörper und Prüfkopf - ein vergleichsweise großer Zwischenspalt zwischen Prüfkörper und Prüfkopf durch eine hohe Zufuhr des Kopplungsmediums Wasser überbrückt werden muss. Auch wenn der Encoder als spritzwassergeschützter Drehwinkelgeber beispielsweise zur Erfassung von Anzahl und Richtung der Umdrehungen der Führungsrollen ausgeführt ist, können Schlupf-Effekte zwischen Führungsrolle und der mit Wasser benetzten Oberfläche des Prüfkörpers zu Fehlmessungen führen. Zusätzlich muss die Prüfvorrichtung mit einer Vorrichtung zur Zwischenspeicherung der inkrementalen Messwerte ausgerüstet werden, damit die Prüfvorrichtung auch bei einer eventuellen Abschaltung durch Unterbrechung der Energieversorgung - was unter Werkstatt-Bedingungen niemals gänzlich auszuschließen ist - wieder in ihre Ausgangsposition bzw. Referenzposition zurück fahren kann.

Der Erfindung liegt daher die Aufgabe zugrunde, eine Vorrichtung zur zerstörungsfreien Prüfung einer Radsatzwelle, umfassend einen Tragrahmen mit mindestens einem Prüfkopf und einer Mehrzahl von Führungsrollen, wobei der Tragrahmen entlang einer ersten Längsachse eine im wesentlichen bogenförmige Kontur aufweist und mittels der Führungsrollen gegen die Oberfläche der Radsatzwelle abstützbar sowie auf dieser in dessen Umfangsrichtung verfahrbar ist, bereitzustellen, welche diese Nachteile überwindet und die Zuverlässigkeit und Praxistauglichkeit der Vorrichtung auch unter den räumlich sehr beengten Bedingungen innerhalb des Einbauraums von Radsätzen in Schienenfahrzeugen verbessert.

Erfindungsgemäß wird diese Aufgabe in Verbindung mit dem Oberbegriff des Patentanspruches 1 dadurch gelöst, dass die Vorrichtung zusätzlich einen Neigungssensor aufweist. Derartige Sensoren sind für sich genommen bekannt. Gleichwohl stellt auf dem Gebiet der zerstörungsfreien Prüfung von Radsatzwellen der Ersatz inkrementaler Drehwinkelgeber, die letztlich auf dem Prinzip der Weglängenmessung beruhen, durch einen Neigungssensor einen großen Fortschritt dar, da auf diese Weise die Winkelabhängigkeit und Lage der auftretenden Fehlstellen berührungslos erfassbar und reproduzierbar ist. Die negativen Einflüsse des Kopplungsmediums Wasser auf die Wiederholgenauigkeit bzw. Reproduzierbarkeit der Positionsbestimmung werden auf diese Weise wirksam überwunden. Da der Neigungssensor absolute Messwerte ermittelt, kann die Prüfvorrichtung auch nach einer ggf. vorübergehenden Abschaltung wieder zuverlässig in die Ausgangsstellung zurück bewegt werden. Der Neigungssensor arbeitet bevorzugt nach einem kapazitiven Messprinzip.

Eine sinnvolle Weiterentwicklung des erfinderischen Grundkonzeptes sieht vor, dass der Tragrahmen an beiden in Längsrichtung voneinander beabstandeten Enden jeweils mindestens einen federnd am Tragrahmen gelagerten Gelenkarm aufweist. Auf diese Weise ist die Prüfvorrichtung leichter an die Außenkontur der zu prüfenden Radsatzwelle adaptierbar und der effektive Umschlingungswinkel der Prüfvorrichtung gegenüber der zu prüfenden Radsatzwelle wird erhöht. Durch die federnde Lagerung wird zudem eine Referenz- oder "Null"-Position der Prüfvorrichtung gegenüber der zu prüfenden Radsatzwelle erreicht.
Dabei sind die Gelenkarme derart am Tragrahmen angebracht, dass sie zwischen einer ersten geöffneten bzw. aufgeklappten Stellung und einer zweiten angeklappten bzw. geschlossenen Stellung bewegbar sind, wobei in geöffneter Stellung ein nahezu vollflächiges Auflegen der konkaven Innenkontur der Prüfvorrichtung auf der zu prüfenden Radsatzwelle möglich ist.

Es ist in diesem Zusammenhang besonders vorteilhaft, wenn die Gelenkarme an ihren vom Tragrahmen beabstandeten Enden mittels eines Schnellverschlusses gegeneinander koppelbar sind. Auf diese Weise ist die Prüfvorrichtung zuverlässig mit einem definierten Anpressdruck gegen die Radsatzwelle verspannbar und der mindestens eine Prüfkopf wird zur Anlage auf der Oberfläche der Radsatzwelle gebracht. Ein Aufklappen der Prüfvorrichtung während ihres Gebrauchseinsatzes wird auf diese Weise wirksam verhindert. Es ist dabei besonders vorteilhaft, wenn der Schnellverschluss einen zusätzlichen Längenausgleich in Längsrichtung des Tragrahmens vorsieht, wodurch der Tragrahmen der Prüfvorrichtung noch besser an Radsatzwellen mit unterschiedlichen Schaftdurchmessern anpassbar ist.

Ein wesentlicher Aspekt der Erfindung besteht auch darin, dass der mindestens eine Prüfkopf gelenkig im Tragrahmen gelagert und mittels Federkraft gegen die Oberfläche der Radsatzwelle anstellbar ist. Auf diese Weise wird die Ankopplung des Prüfkopfs gegen die Oberfläche der Radsatzwelle verbessert. Die gelenkige Lagerung erfolgt bevorzugt kardanisch. Die Anstellung mittels Federkraft ermöglicht auch eine bessere Anpassung der Prüfvorrichtung an Radsatzwellen mit unterschiedlichen Schaftdurchmessern. Auf diese Weise können Durchmesser-Unterschiede von bis zu 30mm ausgeglichen werden, ohne dass an der Prüfvorrichtung Umbauten oder sonstige Modifikationen erforderlich sind. Dies beschleunigt und erleichtert die Handhabung der Prüfvorrichtung im Werkstatteinsatz.

Eine besonders vorteilhafte Ausgestaltung der Erfindung sieht vor, dass der mindestens eine Prüfkopf als eine Anordnung von zwei Ultraschall-Prüfköpfen ausgeführt ist, welche zueinander entlang der ersten Längsachse des Tragrahmens beabstandet sind sowie in entgegengesetzter Richtung um einen Winkel von jeweils 25° bis 75° aus einer durch die erste Längsachse des Tragrahmens verlaufenden Ebene geneigt sind. Auf diese Weise schallen die Prüfköpfe in verschiedene, zueinander beabstandete Bereiche der Radsatzwelle ein, welche sich beiderseits der Ankoppelposition der erfindungsgemäßen Prüfvorrichtung auf der Radsatzwelle erstrecken. In Kombination mit einer zweiten erfindungsgemäßen Prüfvorrichtung, die in Längsrichtung von der ersten Prüfvorrichtung beabstandet auf derselben Radsatzwelle montiert ist, können die beiden zueinander nächstliegenden Prüfköpfe mittels einer V-Durchschallung der Radsatzwelle (d.h. der Prüfkopf der ersten Prüfvorrichtung arbeitet im Sende-Modus während der benachbarte Prüfkopf der zweiten Prüfvorrichtung im Empfangs-Modus arbeitet) zur Bestimmung der Schallschwächung innerhalb der Radsatzwelle eingesetzt werden.

Die Erfindung schlägt ferner vor, dass der Tragrahmen seitliche Abstandshalter aufweist. Diese weisen ein voreinstellbares Maß auf. Auf diese Weise kann die Prüfvorrichtung im Prüfeinsatz schnell und ohne zusätzliche Einstellarbeiten auf eine in Bezug auf eine Wellenbremsscheibe oder die Radscheibe definierte Position auf der Radsatzwelle gebracht werden. Der Prüfvorgang wird dadurch wirksam beschleunigt. In bevorzugter Weise sind die seitlichen Abstandshalter auf unterschiedliche Abstandsmaße umbaubar bzw. anpassbar.

Es ist ferner von Vorteil, wenn die Vorrichtung mindestens ein mittels Federkraft gegen die Oberfläche der Radsatzwelle anstellbares und motorisch angetriebenes Reibrad aufweist. Auf diese Weise ist ein motorisches Antreiben bzw. Drehen der Prüfvorrichtung in Bezug auf die Radsatzwelle möglich. Zur Verbesserung des Reibschlusses und der Kraftübertragung ist das mindestens eine Reibrad bevorzugt mit einer gummierten Oberfläche versehen. Dies soll ein Durchrutschen auf der mit Wasser benetzten Radsatzwelle verhindern.

Die vorliegende Erfindung wird nachfolgend anhand eines Ausführungsbeispieles und dazugehöriger Zeichnungen näher erläutert. Es zeigen
Figur 1: eine erfindungsgemäße Prüfvorrichtung
Figur 2: die mögliche Kopplung zweier erfindungsgemäßer Prüfvorrichtungen mittels Kopplungselementen

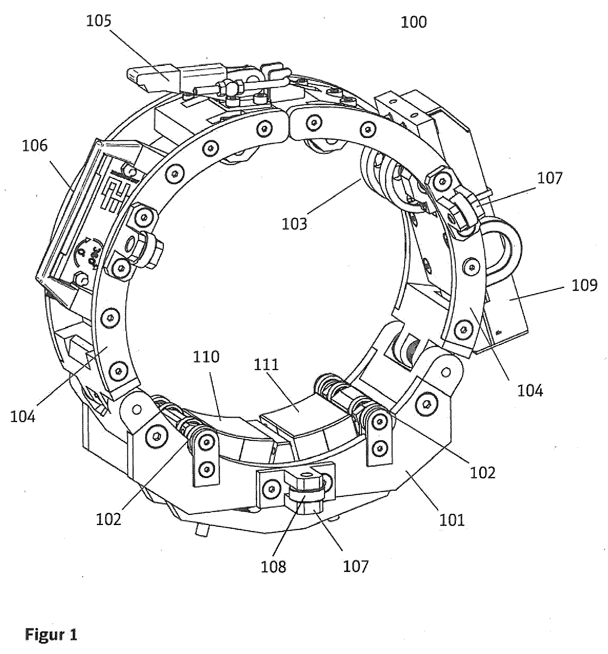

Figur 1 zeigt eine Ultraschallprüfvorrichtung (100) zur zerstörungsfreien Prüfung einer (bildlich nicht dargestellten) Radsatzwelle. Diese umfasst einen Tragrahmen (101), welche entlang seiner Längsachse eine im Wesentlichen kreisbogenförmige Kontur aufweist. An den beiden in Längsrichtung voneinander beabstandeten Enden ist der Tragrahmen (101) um jeweils einen Gelenkarm (104) erweitert, welcher federnd derart am Tragrahmen (101) angelenkt ist, dass die beiden Gelenkarme (104) durch die Federkraft aufeinander zu bewegt werden und somit eine federkraftunterstützte Zustellbewegung auf die zu prüfende Radsatzwelle hin erfahren. Zusätzlich sind beide Gelenkarme (104) an ihren von den Anlenkpunkten zum Tragrahmen (101) entfernten Enden mittels eines Schnellverschlusses (105) gegeneinander koppelbar. In den Tragrahmen (101) sind zwei Ultraschall-Prüfköpfe (110, 111) eingebaut, deren Schwingelemente auf gegenläufig orientierten keilförmigen Unterlagen aufgebracht sind und deren zur Radsatzwelle hin orientierte Ankoppelflächen näherungsweise mit demselben Radius wie die zu prüfende Radsatzwelle gekrümmt sind. Die Ankoppelpositionen und Winkelbereich der beiden Prüfköpfe (110, 111) sind so gewählt, dass durch vier unterschiedliche Ankoppel-Positionen der komplette Oberflächenumfang der zu prüfenden Radsatzwelle erfassbar ist. Beide Prüfköpfe (110, 111) sind im Tragrahmen (101) mittels einer kardanischen Aufhängung gelenkig gelagert und mittels Federkraft gegen die Oberfläche der zu prüfenden Radsatzwelle anstellbar. Durch die gelenkige und kraftschlüssige Verbindung der Prüfeinheit (100) um die Radsatzwelle sind alle Bereiche der Wellenschaft-Oberfläche als potentielle Ankoppelpositionen geeignet. Die adaptive Bauweise ermöglicht die Prüfung aller im Eisenbahnverkehr gängigen Wellenbauarten. Die Prüfvorrichtung (100) weist zusätzlich einen kapazitiven Neigungssensor (106) auf, der im Bereich eines der beiden Gelenkarme (104) eingebaut ist. Dieser ermittelt die absolute Neigung der Prüfvorrichtung in Bezug auf eine durch die Schwerkraft vorgegebene Lotrichtung. Das Ausgangssignal des Neigungssensors (106) wird in Verbindung mit den Messdaten der Prüfköpfe (110, 111) aufgezeichnet, so dass eine eindeutige Lage-Referenzierung der prüftechnisch ermittelten Fehlstellen in Bezug auf die geprüfte Radsatzwelle möglich ist. Zudem wird das Ausgangssignal des Neigungssensors (106) dazu verwendet, um die Prüfvorrichtung (100) nach Abschluss des Prüfvorgangs in eine Null-Lage bzw. die Ausgangsposition der Prüfung zurückzuführen.

Sowohl der Tragrahmen (101) als auch die Gelenkarme (104) weisen beiderseits eine Mehrzahl von Abstandhaltern (107), an deren äußerem Ende jeweils eine Abstandsrolle (108) sitzt. Dies ermöglicht ein einfaches Positionieren der Prüfvorrichtung (100) entlang der Längsachse der Radsatzwelle in Bezug auf benachbarte Bezugsflächen, die zu dieser Längsachse lotrecht sind, wie z.B. eine auf der Radsatzwelle aufgebrachte Wellenbremsscheibe.

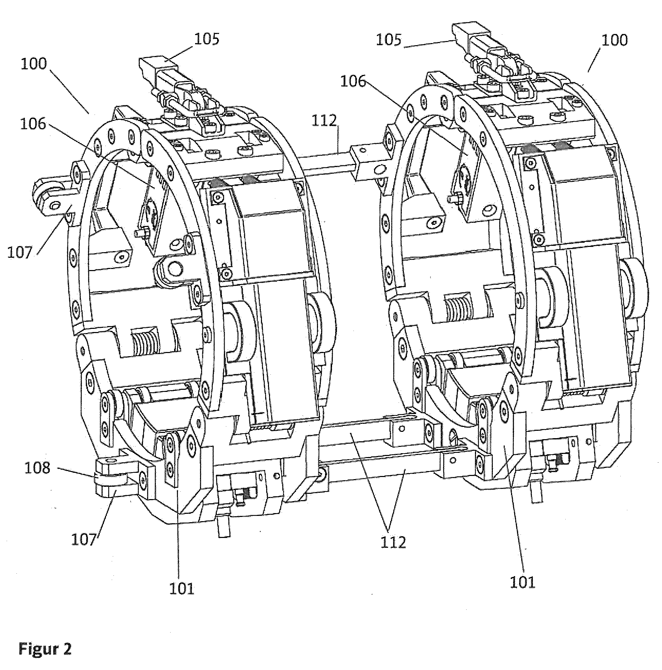

Figur 2 zeigt die mögliche Kopplung zweier erfindungsgemäßer Prüfvorrichtungen (100) mittels eines Kopplungselementes (112). Dieses Kopplungselement (112) umfasst eine Mehrzahl von starren Verbindungsstangen, welche eine zweite Prüfvorrichtung derart an eine erste Prüfvorrichtung anschließen, dass beide zueinander entlang der Längsachse der zu prüfenden Radsatzwelle fluchten. Auf diese Weise ist eine Überlappung der von beiden Prüfvorrichtungen abgedeckten Prüfbereiche möglich: der geometrische Prüfbereich des jeweils innenliegenden bzw. zur benachbarten Prüfvorrichtung orientierten Prüfkopfes deckt auch den unmittelbar unterhalb bzw. innerhalb der benachbarten Prüfvorrichtung liegenden Bereich der Radsatzwelle ab. Eine solche Kopplung zweier erfindungsgemäßer Prüfvorrichtungen reduziert auch den für die Prüfung benötigten Zeitaufwand, da sie das manuelle Umsetzen einer einzelnen Prüfvorrichtungen von einer ersten zu einer zweiten Prüfposition und wiederholte Durchführen einer zweiten Prüffahrt entbehrlich macht.
Mit einer V-Durchschallung des Wellenschaftes mit einem ausgewählten Einschallwinkel aus zwei neben- bzw.gegeneinander angeordneten Prüfeinheiten unter Nutzung der Sender- und Empfängertechnik wird die Bestimmung der wellenabhängigen Schallschwächung für die Echohöhenbewertung der Signale ermöglicht. Die Ultraschall-Prüfköpfe sind dabei als Gruppenstrahler ausgelegt und erzeugen nach dem "Phased Array"-Prinzip durch eine zeitlich verzögerte Ansteuerung unterschiedliche Einschallwinkel.

### Bezugszeichenliste:

- 100: Ultraschallprüfvorrichtung
- 101: Tragrahmen
- 102: Führungsrolle
- 103: Antriebsrad
- 104: Gelenkarm
- 105: Schnellverschluss
- 106: Neigungssensor
- 107: Abstandshalter
- 108: Abstandsrolle
- 109: Motor
- 110: Ultraschall-Prüfkopf
- 111: Ultraschall-Prüfkopf
- 112: Kopplungselement

## Patentansprüche

1. Vorrichtung (100) zur zerstörungsfreien Prüfung einer Radsatzwelle, umfassend einen Tragrahmen (101) mit mindestens einem Prüfkopf und einer Mehrzahl von Führungsrollen (102), wobei der Tragrahmen (101) entlang einer ersten Längsachse eine im wesentlichen bogenförmige Kontur aufweist und mittels der Führungsrollen (102) gegen die Oberfläche der Radsatzwelle abstützbar sowie auf dieser in deren Umfangsrichtung verfahrbar ist,
**dadurch gekennzeichnet, dass**
die Vorrichtung zusätzlich einen Neigungssensor (106) aufweist.

2. Vorrichtung zur zerstörungsfreien Prüfung einer Radsatzwelle nach Patentanspruch 1, **dadurch gekennzeichnet, dass** der Tragrahmen (101) an beiden in Längsrichtung voneinander beabstandeten Enden jeweils mindestens einen federnd am Tragrahmen (101) gelagerten Gelenkarm (104) aufweist.

3. Vorrichtung zur zerstörungsfreien Prüfung einer Radsatzwelle nach Patentanspruch 2, **dadurch gekennzeichnet, dass** die Gelenkarme (104) an ihren vom Tragrahmen (101) beabstandeten Enden mittels eines Schnellverschlusses (105) gegeneinander koppelbar sind.

4. Vorrichtung zur zerstörungsfreien Prüfung einer Radsatzwelle nach einem der Patentansprüche 1 bis 3, **dadurch gekennzeichnet, dass** der mindestens eine Prüfkopf gelenkig im Tragrahmen (101) gelagert und mittels Federkraft gegen die Oberfläche der Radsatzwelle anstellbar ist.

5. Vorrichtung zur zerstörungsfreien Prüfung einer Radsatzwelle nach einem der Patentansprüche 1 bis 4, **dadurch gekennzeichnet, dass** der mindestens eine Prüfkopf als eine Anordnung von zwei Ultraschall-Prüfköpfen (110, 111) ausgeführt ist, welche zueinander entlang der ersten Längsachse des Tragrahmens (101) beabstandet sind sowie in entgegengesetzter Richtung um einen Winkel von jeweils 25° bis 75° aus einer durch die erste Längsachse des Tragrahmens (101) verlaufenden Ebene geneigt sind.

6. Vorrichtung zur zerstörungsfreien Prüfung einer Radsatzwelle nach einem der Patentansprüche 1 bis 5, **dadurch gekennzeichnet, dass** der Tragrahmen (101) seitliche Abstandshalter (107) aufweist.

7. Vorrichtung zur zerstörungsfreien Prüfung einer Radsatzwelle nach einem der Patentansprüche 1 bis 6, **dadurch gekennzeichnet, dass** die Vorrichtung mindestens ein mittels Federkraft gegen die Oberfläche der Radsatzwelle anstellbares und motorisch angetriebenes Reibrad (103) aufweist.
